# EUROPÄISCHE PATENTANMELDUNG

(11) **EP 4 703 609 A1**
(43) Veröffentlichungstag der Anmeldung: **04.03.2026**
(21) Anmeldenummer: 25199300.2
(22) Anmeldetag: 01.09.2025
(51) Int. Cl.: F16J 15/3288, F01D 11/00

(54) **DICHTUNGSEINRICHTUNG, INSBESONDERE DICHTUNGSEINRICHTUNG EINER STRÖMUNGSMASCHINE**

(30) Priorität: 03.09.2024 DE 102024125115
(71) Anmelder: MTU Aero Engines AG, 80995 München (DE)
(72) Erfinder: Siebel, Matthias, 80995 München (DE)

(57) **Zusammenfassung**

Die vorliegende Erfindung betrifft eine Dichtungseinrichtung (10) insbesondere eine Dichtungseinrichtung (10) einer Strömungsmaschine, mit wenigstens einem Bürstenelement (18) zum Abdichten eines Spalts (14) zwischen einem ersten Bauteil (16a) und einem zweiten Bauteil (16b). Das erste Bauteil (16a) und das zweite Bauteil (16b) sind Rotorbauteile.

## Beschreibung

Die vorliegende Erfindung betrifft eine Dichtungseinrichtung, mit wenigstens einem Bürstenelement zum Abdichten eines Spalts zwischen einem ersten Bauteil und einem zweiten Bauteil, welche im Betrieb vorzugsweise unbeweglich zueinander angeordnet sind, ohne dass sich die relative Position der beiden Bauteile im bestimmungsgemäßen Betrieb zueinander im Wesentlichen ändert. Zudem betrifft vorliegende Erfindung eine Strömungsmaschine mit einer solchen Dichtungseinrichtung und eine Verwendung einer solchen Dichtungseinrichtung.

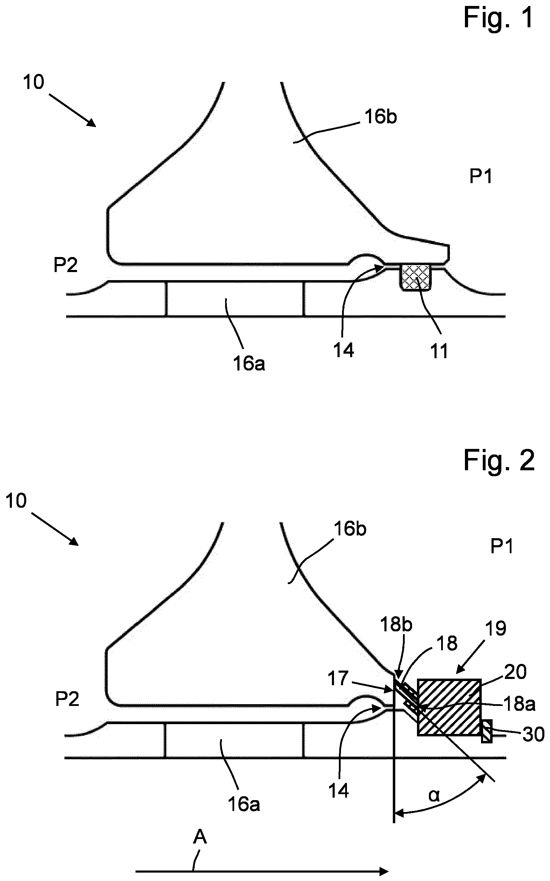

Insbesondere beim Betrieb von Strömungsmaschinen werden zum Erreichen eines möglichst großen Wirkungsgrads etwaige Spalte, durch welche das Arbeitsfluid entweichen kann, vermieden oder zumindest möglichst klein gehalten. Dadurch kann eine ungewollte Leckage von Arbeitsfluid eingeschränkt werden. Dies gilt insbesondere auch innerhalb einer Strömungsmaschine oder anderer insbesondere gasdurchströmter Maschinen und für Spalte zwischen zwei Bauteilen, welche im Betrieb unbeweglich zueinander angeordnet sind, ohne dass sich die relative Position der beiden Bauteile im bestimmungsgemäßen Betrieb zueinander im Wesentlichen ändert. So sind aus dem Stand der Technik beispielsweise Dichtungseinrichtungen bekannt (siehe Fig. 1), welche eine Abdichtung mittels eines Dichtungsrings zwischen zwei im Betrieb unbeweglich zueinander angeordneten Bauteilen erreichen.

Solche Dichtungselemente dichten zumindest zwei Bereiche, in welchen unterschiedliche Drücke herrschen, voneinander ab. Auch hohe Temperaturunterschiede werden durch den Dichtring teilweise voneinander abgeschirmt. Eine derartige Abschottung ist jedoch, wie aus dem Stand der Technik bekannt ist (siehe Fig. 1), verschleißanfällig.

Aufgrund physikalischer Randbedingungen, wie zum Beispiel Relativbewegung, Luftströmung, großer Druckdifferenz und -schwingungen, kann der Dichtring einem sogenannten Verschleiß (Fretting) unterliegen und nach relativ kurzer Zeit zu einer Leckage zwischen den beiden Druckräumen führen.

Hiervon ausgehend ist es eine Aufgabe der vorliegenden Erfindung, eine verbesserte Dichtungseinrichtung, insbesondere einer Strömungsmaschine bereitzustellen, welche in besonders einfacher, kostengünstiger und verschleißarmer Art und Weise eine Abdichtung zwischen zumindest zwei Druckräumen mit unterschiedlicher Temperatur und/ oder unterschiedlichen Druck vorzuschlagen. Dies wird erfindungsgemäß durch die Lehre der unabhängigen Ansprüche erreicht, vorteilhafte Ausführungen sind Gegenstand der Unteransprüche.

Zur Lösung der Aufgabe wird eine Dichtungseinrichtung, insbesondere eine Dichtungseinrichtung einer Strömungsmaschine vorgeschlagen, mit wenigstens einem Bürstenelement zum Abdichten eines Spalts zwischen einem ersten Bauteil und einem zweiten Bauteil, welche im Betrieb vorzugsweise unbeweglich zueinander angeordnet sind, ohne dass sich die relative Position der beiden Bauteile im bestimmungsgemäßen Betrieb zueinander im Wesentlichen ändert. Dabei ist das Bürstenelement zur Ausbildung einer Bürstendichtung am ersten Bauteil befestigt oder fixiert und liegt an einer Dichtfläche des zweiten Bauteils an oder kontaktiert diese, um im bestimmungsgemäßen Betrieb zwei Druckräume unterschiedlicher Drücke voneinander abzudichten.

Die beiden den Spalt ausbildenden Bauteile sind im Betrieb vorzugsweise unbeweglich zueinander angeordnet, ohne dass sich die relative Position dieser im bestimmungsgemäßen Betrieb zueinander im Wesentlichen ändert. Geringe relative Bewegungen oder Positionsänderungen, die z.B. thermisch bedingt, fliehkraftbedingt oder spannungsbedingt sein können, beispielsweise im Millimeterbereich, können im bestimmungsgemäßen Betrieb dabei zueinander auftreten, ohne dass dadurch die Funktion beeinträchtigt wird und/oder die Änderung dabei Wesentlich ist. Im Wesentlichen kann dabei insbesondere heißen, dass eine Bewegung dieser beiden Bauteile relativ zueinander, beispielsweise in axialer und/oder radialer Richtung, weniger als 2 mm, insbesondere weniger als 1 mm beträgt. Bei einer Strömungsmaschine ist die Bewegung in einer radialen Richtung der beiden Bauteile darüber hinaus vorzugsweise auf weniger als 2 mm, insbesondere auf weniger als 1 mm, insbesondere auf weniger als 0,7 mm begrenzt.

Sofern auf eine axiale und/oder radiale Richtung Bezug genommen wird, stehen diese senkrecht zueinander, wobei die radiale Richtung insbesondere um eine axiale Richtung bzw. Achse, rotierbar ist. Bei einer Strömungsmaschine entspricht die axiale Richtung der Richtung der Rotationsachse des Rotors. Unter "radial" und "axial" werden im Rahmen dieser Erfindung auch Richtungen bzw. Erstreckungen verstanden, die von einer idealen axialen oder idealen radialen Erstreckungsrichtung beispielsweise in einem einstelligen Winkelgradbereich abweichen und entsprechend im Wesentlichen radial bzw. axial ausgerichtet sind.

Durch die Definition dieser Richtungen ist eine mögliche Bewegung der beiden Bauteile auch relativ zueinander definiert. Dies heißt auch, dass beide Bauteile im Betrieb einer Strömungsmaschine oder einer anderen insbesondere gasdurchströmten Maschine im Wesentlichen quasistatisch zueinander positioniert bleiben.

Durch das Anliegen des Bürstenelements an einer Dichtfläche des zweiten Bauteils oder das Kontaktieren einer Dichtfläche des zweiten Bauteils wird eine Bürstendichtung ausgebildet. Dabei handelt es sich um eine formschlüssige Verbindung zwischen dem Bürstenelement und der Dichtfläche, welche eine möglichst vollständige Abschirmung zweier Druckbereiche in Bezug auf Druck- und Temperatur entstehen lässt. Mit anderen Worten wird das Bürstenelement insbesondere unter einem Winkel derart an die Dichtfläche angedrückt bzw. angepresst, dass eine Druck- und insbesondere auch Temperaturabschirmung erreichbar ist.

Durch die vorgeschlagene Ausgestaltung wird eine weitgehende, insbesondere vollständige Abdichtung zweier Druckräume voneinander mittels des hier vorgeschlagenen Bürstenelements erreicht.

Das erste Bauteil und das zweite Bauteil sind Rotorbauteile. Diese Bauteile können fest am Rotor verbaut sein bzw. können einen Teil des Rotors bilden und entsprechend gemeinsam rotieren. Eine Relativbewegung zwischen diesen Bauteilen kann im bestimmungsgemäßen Betrieb lediglich aufgrund der äußeren, insbesondere durch die Rotationsbewegung auf diese Bauteile einwirkenden Kräfte erfolgen, welche insbesondere zu unterschiedlichen Verformungen der Bauteile führen kann, und eine Relativbewegung zwischen diesen Bauteilen bedingen kann. Die vorgeschlagene Dichtungseinrichtung eignet sich insbesondere für eine verbesserte Abdichtung zwischen Rotorbauteilen, wobei das erste Bauteil eine Welle und/ oder das zweite Bauteil eine Scheibe oder Blisk ("Bladed Disk") sein kann.

Im Betrieb können das erste Bauteil und das zweite Bauteil insbesondere jeweils gleich schnell rotieren.

Bei einer Ausführungsform der Dichtungseinrichtung wird das Bürstenelement durch den Druckunterschied zwischen den zwei Druckräumen unterschiedlicher Drücke gegen die Dichtfläche des zweiten Bauteils gedrückt. Mit steigendem Druckunterschied steigt damit auch die Kraft, welche das Bürstenelement an die Dichtfläche drückt, wodurch die Abdichtung von Druck- und/ oder Temperatur der beiden Druckräume wiederum verbessert wird. Eine solche Anordnung führt zu einer selbstverstärkenden Wirkung der Bürstendichtung. Ein Druckunterschied zwischen den beiden Druckräumen kann sich in einem Verhältnis P1/P2 zwischen 3 und 12, insbesondere zwischen 4 und 11 und beispielsweise etwa 8,5 betragen.

Ein Bürstenelement kann aus einer Vielzahl von Einzelfasern bzw. Borsten bestehen, die jeweils zu einem Faserbündel angeordnet sind. Dabei liegen diese Einzelfasern vorzugsweise ungefähr parallel aneinander. Die Faserbündel sind wiederum miteinander zu einem Faserpaket verflochten bzw. verdrillt. Dabei ist das Faserbündel an sich zumindest teilweise innerhalb eines Gehäuses geführt und gehalten. Mittels des Gehäuses kann das Faserbündel formschlüssig druck- und vorzugsweise auch temperaturabdichtend an die Außenfläche des zweiten Bauteils gedrückt bzw. gepresst werden.

Gemäß einer Ausführungsform liegt ein Drahtpaket der Bürstendichtung in einem Winkel zwischen 10° und 90°, insbesondere Winkel von 10°, 15°, 20°, 25°, 30°, 35°, 40°, 45°, 50°, 55°, 60°, 65°, 70°, 75°, 80°, 85° oder 90° sowie in entsprechenden Zwischenwinkeln an der Dichtfläche des zweiten Bauteils an oder ist an dessen Dichtfläche anlegbar. Durch die hier beschriebene Winkelanlegung der Fasern bzw. Borsten des Bürstenelements wird ein zumindest in einer Winkelkomponente in Richtung des ersten Bauteils erzeugter Anpressdruck erreicht.

In einer bevorzugten Ausführung beträgt der Winkel 90° ± 15°, vorzugsweise ± 10°, besonders vorzugsweise ± 5°, insbesondere ± 3°.

Bei einer Ausführungsform dient die Bürstendichtung zum Abdichten eines Radialspalts insbesondere einer Strömungsmaschine. Dabei sind üblicherweise das erste und das zweite Bauteil zumindest abschnittsweise koaxial in einem zumindest überlappenden axialen Abschnitt so angeordnet, dass der Radialspalt insbesondere von einer an dem einen Bauteil ausgebildeten Innenumfangsfläche und einer am anderen Bauteil ausgebildeten Außenumfangsfläche gebildet wird.

Eine radiale Richtung erstreckt sich senkrecht zu einer Rotationsachse eines Rotors, wobei die radiale Richtung bzw. wenigstens ein sich wenigstens abschnittsweise in radialer Richtung erstreckendes Bauteil in zumindest einer Ausführungsform um die Rotationsachse rotierbar ist. Dabei ergibt sich am Umfang bzw. an einem sich radial von der Rotationsachse erstreckenden Bereich des Bauteils eine Umfangsgeschwindigkeit. Ein Abstand der an einem Bauteil ausgebildeten Außenumfangsfläche zur Innenfläche eines anderen radial umlaufend ausgebildeten Bauteils bildet dabei einen Radialspalt aus, welcher bei einer Strömungsmaschine insbesondere in Richtung der Rotationssachse durchströmbar ist. Unter "radial" und "axial" werden hierbei auch Richtungen bzw. Erstreckungen verstanden, die von einer idealen axialen oder idealen radialen Erstreckungsrichtung in einem insbesondere einstelligen Winkelgradbereich abweichen oder wenigstens abschnittsweise "im Wesentlichen radial" und "im Wesentlichen axial" ausgerichtet sind, jedenfalls aber in einer überwiegend "radialen" oder "axialen" (größer oder kleiner 45° zur Rotationsachse geneigt) Erstreckungsrichtung angeordnet sind.

Dabei kann in zumindest einer Ausführungsform das erste Bauteil und/oder das zweite Bauteil einem statischen und/oder dynamischen System einer Strömungsmaschine zugehören.

Gemäß einer Ausführungsform ist das Bürstenelement quasistatisch zwischen den beiden Bauteilen angeordnet, wobei die beiden Bauteile sich gemeinsam bewegen, ohne dass die relative Position der beiden Bauteile im Wesentlichen verändert wird oder veränderbar ist. Bei einer quasistatischen Anordnung bewegen sich beide Bauteile zwar relativ zu einem äußeren Bezugspunkt gesehen, zum Beispiel im Sinne einer Rotation, jedoch sind diese beiden Bauteile in Bezug zueinander, d. h. relativ zueinander, im Wesentlichen unbeweglich.

Bei einer Ausführungsform ist an einer von dem Spalt abgewandten Seite des Bürstenelements ein Stoppelement zur Fixierung und Verschiebesicherung des Bürstenelements an dem ersten Bauteil angeordnet. Mit anderen Worten wird durch das Stoppelement eine konstante Fixierung des Bürstenelements im Rahmen der oben genannten Bewegungsfreiheitsgrenzen sichergestellt. Um das Bürstenelement vom Spalt ausgehend nach außen, also in Richtung weg von dem zweiten Bauteil, zu stabilisieren und fixieren, und weiter insbesondere an das zweite Bauteil anzulegen bzw. anzudrücken, ist an dem ersten Bauteil an der von dem zweiten Bauteil abgewandten Seite des Bürstenelements ein hier beschriebenes Stoppelement angeordnet.

Bei einer Ausführungsform der Dichtungseinrichtung kann das Bürstenelement ein Thermoplast, ein Meta-Aramid, Polyetheretherketon (PEEK), Keramik und/oder ein Metall umfassen oder aus einem der genannten Werkstoffe oder einer Kombination dieser Werkstoffe gebildet sein. Die Wahl des Werkstoffs erfolgt dabei ausgehend von den zu erwartenden Betriebstemperaturen und den auf das Bürstenelement wirkenden Kräfte.

Des Weiteren betrifft die hier beschriebene Erfindung eine Strömungsmaschine, insbesondere Flugzeugtriebwerk, mit mindestens einer Dichtungseinrichtung gemäß wenigstens einer der vorausgehend beschriebenen Ausführungsformen, welche geeignet und bestimmt ist, zwei Druckräume unterschiedlicher Drücke (P1, P2) voneinander abzudichten.

Des Weiteren betrifft die vorliegende Erfindung eine Verwendung einer Dichtungseinrichtung nach zumindest einem der vorausgehend beschriebenen Ausführungsformen in einer Strömungsmaschine, insbesondere in einem Flugzeugtriebwerk.

Weitere Merkmale, Vorteile und Anwendungsmöglichkeiten der Erfindung ergeben sich aus der nachfolgenden Beschreibung in Zusammenhang mit den Figuren. Dabei zeigt:
- Fig. 1: eine Schnittdarstellung einer beispielhaften Dichtungseinrichtung 10 innerhalb eines Verdichters gemäß dem Stand der Technik und
- Fig. 2: eine Schnittdarstellung einer beispielhaften erfindungsgemäßen Dichtungseinrichtung 10 mit einer beispielhaften erfindungsgemäßen Bürstendichtung.
- Fig. 3: eine Schnittdarstellung einer beispielhaften erfindungsgemäßen Dichtungseinrichtung 110 gemäß einer zweiten Ausführungsform mit einer beispielhaften erfindungsgemäßen Bürstendichtung.
- Fig. 4: eine Schnittdarstellung einer beispielhaften erfindungsgemäßen Dichtungseinrichtung 210 gemäß einer zweiten Ausführungsform mit einer beispielhaften erfindungsgemäßen Bürstendichtung.

**Fig. 1** zeigt eine Schnittdarstellung einer beispielhaften Dichtungseinrichtung 10, insbesondere eine Dichtungseinrichtung 10 einer Strömungsmaschine, gemäß dem Stand der Technik, die zum Abdichten eines Radialspalts zwischen zwei Bauteilen 16a, 16b der Strömungsmaschine dargestellt ist.

Erkennbar ist ein Dichtring 11 zwischen den beiden Bauteilen 16a, 16b, welcher einen ersten Druckbereich P1 und einen zweiten Druckbereich P2 abdichtet. Eine derartige Abdichtung ist insbesondere auch eine Temperaturabdichtung, sodass auch innerhalb der verschiedenen Druckräume unterschiedliche Temperaturen vorgehalten werden können, ohne dass sich ein wesentlicher oder gar kein Temperaturgradient zwischen den beiden Druckräumen ausbilden kann. Solche Dichtringe 11 sind jedoch verschleißanfällig. Dies liegt an Relativbewegungen der Luftströmung, großen Druckdifferenzen und Schwingungen innerhalb einer Strömungsmaschine oder anderer insbesondere gasdurchströmter Maschinen. Ein zwischen dem ersten Bauteil 16a und dem zweiten Bauteil 16b angeordneter Dichtring 11 ist daher nicht ohne weiteres für lange Laufzeiten geeignet.

**Fig. 2** zeigt eine Schnittdarstellung einer beispielhaften erfindungsgemäßen Dichtungseinrichtung 10. Diese unterscheidet sich von der in der Fig. 1 dargestellten Dichtungseinrichtung 10 des Stands der Technik unter anderem dadurch, dass ein Bürstenelement 18 zur Ausbildung einer Bürstendichtung 19 außerhalb des abzudichtenden Spalts 14 zwischen dem ersten 16a und dem zweiten 16b Bauteil angeordnet ist.

In Fig. 2 ist eine beispielhafte erfindungsgemäße Dichtungseinrichtung 10 gezeigt, insbesondere zum Abdichten eines Spalts 14 zwischen einem ersten Bauteil 16a und einem zweiten Bauteil 16b einer oder innerhalb einer Strömungsmaschine, mit wenigstens einem Bürstenelement 18 zur Ausbildung einer Bürstendichtung 19, welche einen an einem Gehäuse 20 fixierten ersten Endbereich 18a und einen an einer Dichtfläche 22 des zweiten Bauteils 16b anlegbaren zweiten Endbereich 18b aufweist. Das Bürstenelement 18 ist an seinem ersten Endbereich 18a an einem Gehäuse 20 gehalten. Das Bürstenelement 18 ist quasistatisch zwischen den beiden Bauteilen 16a und 16b angeordnet, wobei die beiden Bauteile 16a, 16b sich gemeinsam bewegen, ohne dass die relative Position der beiden Bauteile 16a, 16b im Wesentlichen verändert wird oder veränderbar ist, um die beiden Druckräume unterschiedlicher Drücke P1, P2 voneinander abzudichten.

Die in Fig. 2 gezeigte Dichtungseinrichtung 10 weist eine Bürstendichtung 19 auf, welche die beiden, unter einem Druck P1 und einem Druck P2 stehenden Druckräume mittels des Bürstenelements 18 drucktechnisch und zum Beispiel auch temperaturtechnisch voneinander abschirmt. Der in Fig. 2 dargestellte Spalt 14 stellt einen Radialspalt dar, insbesondere einer Strömungsmaschine. Wie gezeigt sind das erste 16a und das zweite 16b Bauteil koaxial in einem überlappenden axialen Abschnitt einer Strömungsmaschine so angeordnet, dass der Radialspalt 14 insbesondere von einer an dem zweiten Bauteil 16b ausgebildeten Innenumfangsfläche und einer am ersten Bauteil 16a ausgebildeten Außenumfangsfläche gebildet wird. Anhand des Pfeils ist in Fig. 2 die Richtung der Rotationsachse A der Strömungsmaschine eingezeichnet.

Ein Druckunterschied zwischen den beiden Drücken P1 und P2 kann ein Verhältnis P1/P2 zwischen 3 und 12, vorzugsweise zwischen 4 und 11, zum Beispiel etwa 8,5 aufweisen. Der Druck in dem Raum P1 kann daher um den entsprechenden Faktor höher sein als der Druck im Raum P2. Dies heißt, dass das in Fig. 2 unter einem Winkel α schräg an die Dichtfläche 17 des zweiten Bauteils 16b angelegte Bürstenelement 18 auch schon, insbesondere jedoch nicht allein, durch den Druckunterschied zwischen den beiden Drücken P1 und P2 angepresst wird.

Ein Anpressen kann daher nicht nur durch die schräge Anstellung und die Fixierung durch ein Stoppelement 30 gewährleistet sein, sondern auch zumindest teilweise durch die entsprechenden Druckunterschiede. Der Druck P2 kann das Bürstenelement 18 an die Dichtfläche 17 anpressen, wenn der Druck P2 größer als der Druck P1 ist. Aus Fig. 2 kann bereits schematisch entnommen werden, dass ein in einem Winkel α schräg angestelltes Bürstenelement 18 eine Anpressung an die Dichtfläche 17 des zweiten Bauteils 16b erleichtert und zum Beispiel bereits herstellen kann. Insbesondere steht das Bürstenelement 18 in Richtung des ersten Bauteils 16a unter einer durch die Anordnung von Gehäuse 20 und Stoppelement 30 vorgesehenen Vorspannungsdruck.

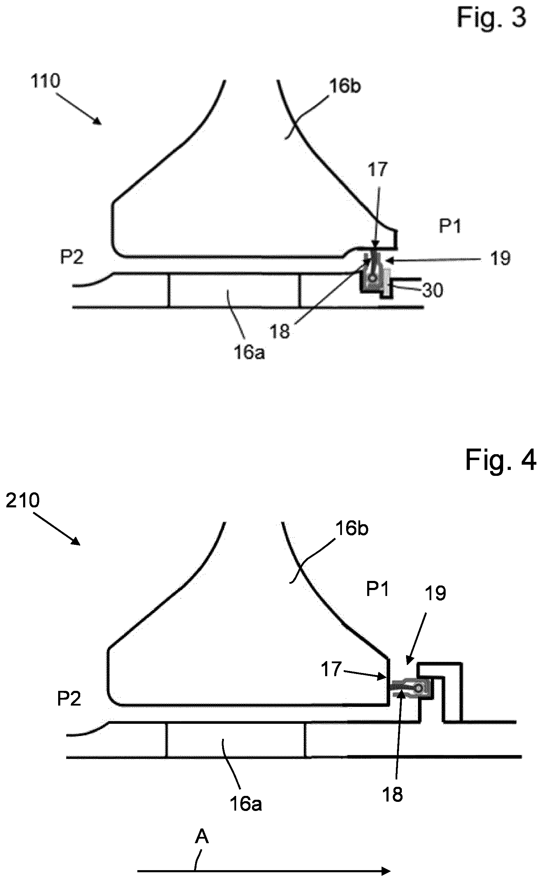

**Fig. 3** zeigt eine Schnittdarstellung einer beispielhaften Dichtungseinrichtung 110 gemäß einer weiteren erfindungsgemäßen Ausführungsform. Diese unterscheidet sich von der in der Ausführungsform der Fig. 2 dadurch, dass das Bürstenelement 18 zur Ausbildung der Bürstendichtung 19 senkrecht zur Rotationsrichtung, d.h. in radiale Richtung ausgerichtet ist.

Die Dichtfläche 17 weist in diesem Beispiel ebenfalls in radiale Richtung, d.h. weist in diesem Beispiel eine Flächennormale auf, die in radiale Richtung verläuft. Dies hat in den Vorteil, dass die Fliehkraft entlang der Borstenausrichtung wirkt. Dadurch kann eine Querauslenkung der Borsten wirksam vermieden werden und/oder eine Dichtwirkung verbessert oder zuverlässig sichergestellt werden.

**Fig. 4** zeigt eine Schnittdarstellung einer beispielhaften Dichtungseinrichtung 210 gemäß einer weiteren erfindungsgemäßen Ausführungsform. Diese unterscheidet sich von der in der Ausführungsform der Fig. 2 dadurch, dass das Bürstenelement 18 zur Ausbildung der Bürstendichtung 19 parallel zur Rotationsrichtung, d.h. in axiale Richtung ausgerichtet ist. Die Dichtfläche 17 weist in diesem Beispiel ebenfalls in axiale Richtung, d.h. die Dichtfläche 17 weist in diesem Beispiel eine Flächennormale auf, die in axale Richtung verläuft. Dies hat in den Vorteil, dass bei relativen axialen Verschiebungen entlang der Rotationsachsenrichtung (axiale Richtung) - z.B. von über 1 mm, z.B. im Bereich von 1 mm bis 2 mm, die Bürstendichtung 19 die axialen Verschiebungen bei einem vorteilhaft geringen Reibverschleiß gut ausgleichen kann.

Wie in dem Beispiel der Fig. 3, beträgt auf auch in dem Beispiel der Fig. 4 hat der Winkel α zwischen der Oberfläche der Dichtfläche 17 und dem angelegten Bürstenelement 18 einen Wert von 90°.

### BEZUGSZEICHENLISTE

- 10: Dichtungseinrichtung
- 11: Dichtungsring
- 14: Spalt
- 16a: erstes Bauteil
- 16b: zweites Bauteil
- 17: Dichtfläche
- 18: Bürstenelement
- 18a: erster Endbereich des Bürstenelements
- 18b: zweiter Endbereich des Bürstenelements
- 19: Bürstendichtung
- 20: Gehäuse
- 30: Stoppelement

- α: Winkel
- A: Rotationsachse
- P1: erster Druckbereich
- P2: zweiter Druckbereich

## Patentansprüche

1. Dichtungseinrichtung (10) insbesondere Dichtungseinrichtung (10) einer Strömungsmaschine, mit wenigstens einem Bürstenelement (18) zum Abdichten eines Spalts (14) zwischen einem ersten Bauteil (16a) und einem zweiten Bauteil (16b), wobei das Bürstenelement (18) zur Ausbildung einer Bürstendichtung (19) am ersten Bauteil (16a) befestigt oder fixiert ist und an einer Dichtfläche (17) des zweiten Bauteils (16b) anliegt oder diese kontaktiert, um im bestimmungsgemäßen Betrieb zwei Druckräume unterschiedlicher Drücke (P1, P2) voneinander abzudichten, **dadurch gekennzeichnet, dass** das erste Bauteil (16a) und das zweite Bauteil (16b) Rotorbauteile sind.

2. Dichtungseinrichtung (10) nach Anspruch 1, **dadurch gekennzeichnet, dass** das erste Bauteil (16a) und das zweite Bauteil (16b) im Betrieb jeweils gleich schnell rotieren.

3. Dichtungseinrichtung (10) nach Anspruch 1 oder 2, **dadurch gekennzeichnet, dass** das erste Bauteil (16a) und das zweite Bauteil (16b) im Betrieb unbeweglich zueinander angeordnet sind, ohne dass sich die relative Position der beiden Bauteile (16a, 16b) im bestimmungsgemäßen Betrieb zueinander im Wesentlichen ändert.

4. Dichtungseinrichtung (10) nach einem der vorhergehenden Ansprüche, **dadurch gekennzeichnet, dass** das erste Bauteil (16a) eine Welle ist und/oder das zweite Bauteil (16b) eine Scheibe oder Blisk ist.

5. Dichtungseinrichtung (10) nach einem der vorhergehenden Ansprüche, **dadurch gekennzeichnet, dass** das Bürstenelement (18) durch den Druckunterschied zwischen den zwei Druckräumen unterschiedlicher Drücke (P1, P2) gegen die Dichtfläche (17) des zweiten Bauteils (16b) gedrückt wird.

6. Dichtungseinrichtung (10) nach zumindest einem der vorhergehenden Ansprüche, **dadurch gekennzeichnet, dass** das Bürstenelement (18) in einem Winkel (α) zwischen 10° und 90°, insbesondere Winkel von 10°, 15°, 20°, 25°, 30°, 35°, 40°, 45°, 50°, 55°, 60°, 65°, 70°, 75°, 80°, 85° oder 90° sowie entsprechende Zwischenwinkel an der Dichtfläche (22) des zweiten Bauteils (16b) anliegt.

7. Dichtungseinrichtung (10) nach zumindest einem der vorhergehenden Ansprüche, **dadurch gekennzeichnet, dass** der Spalt (14) ein Radialspalt insbesondere einer Strömungsmaschine ist.

8. Dichtungseinrichtung (10) nach zumindest einem der vorhergehenden Ansprüche, **dadurch gekennzeichnet, dass** das Bürstenelement (18) quasistatisch zwischen den beiden Bauteilen (16a) und (16b) angeordnet ist, und die beiden Bauteile (16a, 16b) sich gemeinsam bewegen, ohne dass die relative Position der beiden Bauteile (16a, 16b) im Wesentlichen verändert wird oder veränderbar ist.

9. Dichtungseinrichtung (10) nach zumindest einem der vorhergehenden Ansprüche, **dadurch gekennzeichnet, dass** in axialer Richtung der Strömungsmaschine an einer von dem Spalt (14) abgewandten Seite des Bürstenelements (18) ein Stoppelement (30) zur insbesondere radialen und/oder axialen Fixierung und Verschiebesicherung des Bürstenelements (18) an dem ersten Bauteil (16a) angeordnet ist.

10. Dichtungseinrichtung (10) nach zumindest einem der vorhergehenden Ansprüche, **dadurch gekennzeichnet, dass** das Borstenmaterial des Bürstenelements (18) ein Thermoplast, ein Meta-Aramid, Polyetheretherketon (PEEK), Keramik und/ oder ein Metall umfasst.

11. Strömungsmaschine, insbesondere Flugzeugtriebwerk, mit mindestens einer Dichtungseinrichtung (10) gemäß einem der Ansprüche 1 bis 10, welche geeignet und bestimmt ist, zwei Druckräume unterschiedlicher Drücke (P1, P2) voneinander abzudichten.

12. Verwendung einer Dichtungseinrichtung (10) nach einem der Ansprüche 1 bis 10 in einer Strömungsmaschine, insbesondere in einem Flugzeugtriebwerk.
